# EUROPÄISCHE PATENTANMELDUNG

(11) **EP 1 381 249 A1**
(43) Veröffentlichungstag der Anmeldung: **14.01.2004**
(21) Anmeldenummer: 02254814.3
(22) Anmeldetag: 09.07.2002
(51) Int. Cl.: H04Q 7/38

(54) **Verfahren und Funkkommunikationssystem zum Handover zwischen verbundenen Funkzugangsnetzwerken**

(71) Anmelder: SIEMENS AKTIENGESELLSCHAFT, 80333 München (DE)
(72) Erfinder: Dillinger, Markus, 81737 München (DE); Luo, Jijun, 81677 München (DE); Mohyeldin, Elman Bushra, 81476 München (DE)

(57) **Zusammenfassung**

Die Erfindung betrifft ein Verfahren und ein FunkkommunikationssystemVerfahren zur Übergabe einer Verbindung in einem Funkkommunikationssystem, welches über mindestens zwei Funkzugangsnetzwerke (RAT1, RAT2) Informationen übertragen kann,
wobei ein erstes der mindestens zwei Funkzugangsnetzwerke (RAT1) mindestens eine erste Basistation (BS12) und eine erste Funknetzwerkkontrolleinrichtung (RNC1) und ein zweites der mindestens zwei Funkzugangsnetzwerke (RAT2) mindestens eine zweite Basistation (BS21) und eine zweite Funknetzwerkkontrolleinrichtung (RNC2) umfassen,
wobei mindestens eine Teilnehmerstation (MT) in jedem der mindestens zwei Funkzugangsnetzwerke (RAT1, RAT2) senden und/oder empfangen kann. Erfindungsgemäß benutzt die erste Funknetzwerkkontrolleinrichtung (RNC1), welche mit der mindestens einen Teilnehmerstation (MT) verbunden ist, Informationen für eine Entscheidung, ob zwischen der mindestens einen Teilnehmerstation (MT) und der zweiten Basisstation (BS21) eine Verbindung aufgebaut werden soll.

## Beschreibung

Die Erfindung betrifft ein Verfahren zur Übergabe einer Verbindung in einem Funkkommunikationssystem, welches über mindestens zwei Funkzugangsnetzwerke Informationen übertragen kann, nach dem Oberbegriff des Anspruchs 1.

Die Erfindung betrifft ferner ein Funkkommunikationssystem nach dem Oberbegriff des Anspruchs 14.

Kommunikationssysteme gewinnen zunehmend an Bedeutung im wirtschaftlichen, aber auch im privaten Bereich. Es sind starke Bestrebungen vorhanden, kabelgebundene Kommunikationssysteme mit Funkkommunikationssystemen zu verknüpfen. Die entstehenden hybriden Kommunikationssysteme führen zu einer Erhöhung der Zahl der zur Verfügung stehenden Dienste, ermöglichen aber auch eine größere Flexibilität auf Seiten der Kommunikation. So werden Geräte entwickelt, die unterschiedliche Systeme nutzen können (Multi Homing). Der einfachst Fall sind sog. Dual Mode Geräte, die den Zugang zu zwei Netzwerken ermöglichen.

Den Funkkommunikationssystemen kommt dabei aufgrund der ermöglichten Mobilität der Teilnehmer eine große Bedeutung zu.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Uriterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In Funkkommunikationsverbindungen der zweiten und/oder dritten (oder höheren) Generation können Informationen kanalvermittelt (CS Circuit Switched) oder paketvermittelt (PS Packet Switched) übertragen werden.

In der Regel steht auf der einen Seite der Funkschnittstelle eine möglicherweise mobile Teilnehmerstation als kommunizierende Einrichtung und auf der anderen Seite eine über das Basisstationsnetzwerk an ein Kernnetz (Core Net) oder Festnetz angebundene Basisstation. Diese besitzen eine einheitliche Funktion, können aber je nach technischem System unterschiedliche Bezeichnungen aufweisen wie BTS (Base Transceiver Station) im GSM-System, Node B im UMTS-System oder AP (Access Point) im HIPERLAN/2-System.

Eine Verbindung zwischen mindestens einer Basisstation und mindestens einer Teilnehmerstation erfolgt über eine Funkkommunikations-Schnittstelle, beuispielseise als Uu-Schnittstelle bezeichnet. Die mindestens eine Basisstation und eine Funknetzwerkkontrolleinrichtung sind Bestandteile eines Basisstationssubsystems (RNS Radio Network Subsystem). Ein Funkkommunikationssystem umfasst in der Regel mehrere Basisstationssubsysteme, die an das Kernnetz (CN Core Network) angeschlossen sind. Dabei ist die Funknetzwerkkontrolleinrichtung des Basisstationssubsystems mit einer Zugangseinrichtung des Kernnetzes verbunden.

Es sind verschiedene Funkzugangsnetzwerke in Funkkommunikationssystemen mit Anbindung an ein Kernnetz bekannt, wobei folgende Netzwerkknoten wichtige Funktionen insbesondere für die Übertragung von Diensten aufweisen:
- die Zugangseinrichtung zum Kernnetz oder Festnetz, welche in der Regel sowohl dienstspezifische als auch teilnehmerspezifische Informationen hält,
- die Funknetzwerkkontrolleinrichtung, welche in der Regel dienstspezifische Informationen hält.

Im Falle eines Funksystems der dritten Generation werden üblicherweise die Zugangseinrichtung zum Kernnetz als SGSN (Serving GPRS Support Node) und die Funknetzwerkkontrolleinrichtung als RNC (Radio Network Controller) bezeichnet. Der RNC entspricht dem Basisstationskontrolleinrichtung BSC (Base Station Controller) beim GSM System. Bei WLAN-System (Wireless LAN - Local Area Network) lautet die entsprechende Bezeichnung für die Funknetzwerkkontrolleinrichtung üblicherweise APC (Access Point Controller) bzw IUW (Inter Working Unit).

Im hier betrachteten Funkkommunikationssystem umfassen ein erstes der mindestens zwei Funkzugangsnetzwerke mindestens eine erste Basistation und eine erste Funknetzwerkkontrolleinrichtung und ein zweites der mindestens zwei Funkzugangsnetzwerke mindestens eine zweite Basistation und eine zweite Funknetzwerkkontrolleinrichtung, wobei mindestens eine Teilnehmerstation in jedem der mindestens zwei Funkzugangsnetzwerke senden und/oder empfangen kann.

In zukünftigen Netzarchitekturen können Teilnehmerstationen vermehrt in verschiedenen Funkzugangsnetzwerken Verbindungen herstellen. Daher ist man betrebt, die Wechsel von einem Funkzugangsnetzwerk zu einem anderen Funkzugangsnetzwerk so auszubilden und zu organisieren, dass den Anforderungen an moderne Funkkommunikationsnetzen genügt werden kann. Insbesondere sollten der Aufbau einer Verbindung in einem anderen Funkzugangsnetzwerk schnell und möglichst unkompliziert erfolgen.

Der Erfindung liegt daher die Aufgabe zugrunde, ein Verfahren und ein Funkkommunikationssystem der eingangs genannten Art aufzuzeigen, welche eine verbesserte Möglichkeit der Einleitung eines Verbindungsaufbaus in unterschiedlichen Funkzugangsnetzwerken ermöglicht. Insbesondere sollte ein Handover schnell erfolgen können.

Die Aufgabe wird für das Verfahren mit den Merkmalen des Anspruchs 1 und für die Funkkommunikation mit den Merkmalen des Anspruchs 14 gelöst.

Vorteilhafte Ausgestaltung und Weiterbildungen sind Gegenstand der abhängigen Ansprüche.

Erfindungsgemäß benutzt die erste Funknetzwerkkontrolleinrichtung, welche mit der mindestens einen Teilnehmerstation verbunden ist, Informationen für eine Entscheidung, ob zwischen der mindestens einen Teilnehmerstation und der zweiten Basisstation eine Verbindung aufgebaut werden soll. Damit tritt zumindest teilweise eine Verlagerung der aktiven Rolle vom Kernnetz in das Funknetzzugangsnetzwerk auf.

Ein Verbindungsaufbau in einem anderen Funkzugangsnetzwerk wird als Intersystem Handover oder auch als vertikaler Handover bezeichnet. Zahlreiche Gründe für einen solchen Handover können vorhanden sein, etwa funkspezifische Bedingungen, unterschiedliche Datenraten, Gebühren, Dienste oder dergleichen.

Im Rahmen der Erfindung können verschiedene Zugangsnetzwerke mit jeweils einer Funkschnittstelle eingesetzt werden. Grundsätzlich können dies Funkzugangsnetzwerke mit gleicher Funkzugangstechnik (RAT Radio Access Technology) sein, beispielsweise von verschiedenen Netzbetreibern betrieben.

Insbesondere wendet sich die Erfindung jedoch an Funkzugangsnetzwerke mit unterschiedlicher Funkzugangstechnik. Dabei können die verschiedenen Funkkommunikationssysteme in unterschiedlichsten Kombinationen zum Einsatz kommen. Die verschiedenen Zugangsnetzwerke können beispielsweise ein UMTS-System, ein GSM-System einschließlich der erweiterten zweiten Generation, ein WLAN-System (Wireless LAN - Local Area Network) und/oder ein System der der dritten nachfolgenden Generation (beyond 3G bzw 4G) betreffen. Insbesondere kann das WLAN-System nach dem HIPERLAN/2-Standard, nach dem IEEE 802.11a-Standard und/oder nach dem HiSWAN-A-Standard spezifiziert sein.

Einen Verbindungsaufbau zu einer Basisstation, welche von derselben Funknetzwerkkontrolleinrichtung kontrolliert wird, kann die Funknetzwerkkontrolleinrichtung ohne weiteres initieren. In diesem Fall könnte man von einem streng gekoppelten Netzwerk (tight coupling network) sprechen.

Dadurch, dass erfindungsgemäß die erste Funknetzwerkkontrolleinrichtung auf Informationen zum Verbindungsaufbau über eine Basiststation, welche von einer anderen Funknetzwerkkontrolleinrichtung kontrolliert wird, direkt zugreifen kann, wird ermöglicht, dass ein Verbindungsaufbau schnell erfolgen kann. In diesem Fall könnte man von einem lose gekoppelten Netzwerk (loose coupling network) sprechen. Im Rahmen der Erfindung können auch hybride Netzwerkarchitekturen mit sowohl streng als auch lose gekoppelten Netzwerken betrachtet werden.

Die Verbindung zwischen der mindestens einen Teilnehmerstation und der zweiten Basisstation kann anstelle der Verbindung zwischen der mindestens einen Teilnehmerstation und der ersten Basisstation aufgebaut werden. In diesem Fall tritt die neu aufzubauende Verbindung an die Stelle der zunächst bestehenden Verbindung. Man kann von einem Hard Handover sprechen.

Es ist aber auch möglich, dass die Verbindung zwischen der mindestens einen Teilnehmerstation und der zweiten Basisstation zumindest zeitweilig zusätzlich zur Verbindung zwischen der mindestens einen Teilnehmerstation und der ersten Basisstation aufgebaut wird. Diese Bedingungen liegen bei einem Soft Handover vor, wo zumindest über einen Zeitraum zwei Verbindungen der Teilnehmerstation mit jeweils unterschiedlichen Basisstationen bestehen.

Mit Vorteil können Informationen für eine Übergabeentscheidung zumindest teilweise über eine Zugangseinrichtung des Kernnetzes zur ersten Funknetzwerkkontrolleinrichtung übertragen werden. Dabei kann dies auf Anfrage der ersten Funknetzwerkkontrolleinrichtung oder auf Initiative des Kernnetzwerks erfolgen.

Alternativ oder zustzlich können Informationen für eine Übergabeentscheidung zumindest teilweise über eine Schnittstelle (z.B Iur Interface) von der zweiten Funknetzwerkkontrolleinrichtung zur ersten Funknetzwerkkontrolleinrichtung übertragen werden. Damit kann die in der ersten Funknetzwerkkontrolleinrichtung benötigte Information in der Regel besonders schnell zur Verfügung gestellt werden.

In Ausgestaltung der Erfindung werden in der ersten Funknetzwerkkontrolleinrichtung Informationen für eine Übergabeentscheidung gespeichert. Insbesondere für statische oder für länger gültige Informationen birgt diese Maßnahme Vorteile und dient insbeondere dazu, einen Verbindungsaufbau schnell zu ermöglichen. Die gespeicherten Daten können insbeondere benachbarte Funknetzwerkkontrolleinrichtungen der ersten Funknetzwerkkontrolleinrichtung und/oder Funknetzwerkkontrolleinrichtungen eines bestimmten Gebietes betreffen.

In Weiterbildung der Erfindung wird basieren die Informationen zumindest teilweise auf Messungen der mindestens einen Teilnehmerstation. Diese kann eine Basisstation, die von einer anderen Funknetzwerkkontrolleinrichtung als der gegenwärtig aktiven Funknetzwerkkontrolleinrichtung kontrolliert wird, erfassen und Messungen beispielsweise zur Kanalgüte o.ä. durchführen.

Mit besonderem Vorteil können die Informationen zumindest teilweise als Profil oder als Profile vorgehalten werden. Insbeonder können dabei das Profil oder die Profile Nutzerinformationen, Funknetzwerkinformationen, Teilnehmerstationsinformationen und/oder Diensteinformationen (z.B. Dienstgüte QoS) betreffen.

Grundsätzlich können die Informationen statisch (z.B. Größe des Display der Teilnehmerstation) und/oder dynamisch sein. In Abhängigkeit von ihrer jeweiliegn zu erwartenden Gültigkeitsdauer müssen vor allem die potentiell oder tatsächlich stark veränderlichen und daher in der Regel nur kurzzeitig gültigen Informationen möglichst aktuell vorliegen.

Im Zusamenhang mit der Erfindung können insbeosndere rekonfigurierbare Teilnehmerstationen verwendet werden.

In einer wieteren Ausgestaltung der Erfindung werden die Funknetzwerkinformationen insbesondere tabellarisch in der Zugangseinrichtung des Kernnetzes gespeichert.

Neben dem Aufbau von Verbindungen in Funkzugangsnetzwerken mit loser Kopplung können Verbindungen in streng gekoppelten Netzwerken eingeleitet werden. Insbeonder kann die erste Funknetzwerkkontrolleinrichtung eine Übergabe einer Verbindung von der ersten Basistation mit der mindestens einen Teilnehmerstation auf eine von der ersten Funknetzwerkkontrolleinrichtung kontrollierte dritte Basisstation mit der mindestens einen Teilnehmerstation einleiten. Ebenso ist möglich, dass die zweite Funknetzwerkkontrolleinrichtung eine Übergabe einer Verbindung von der zweiten Basistation mit der mindestens einen Teilnehmerstation auf eine von der zweiten Funknetzwerkkontrolleinrichtung kontrollierte vierte Basisstation mit der mindestens einen Teilnehmerstation einleitet.

Das erfindungsgemäße Funkkommunikationssystem umfasst mindestens zwei Funkzugangsnetzwerke zur Übertragung von Informationen. Dabei ist in einem ersten der mindestens zwei Funkzugangsnetzwerke mindestens eine erste Basistation und eine erste Funknetzwerkkontrolleinrichtung und in einem zweiten der mindestens zwei Funkzugangsnetzwerke mindestens eine zweite Basistation und eine zweite Funknetzwerkkontrolleinrichtung vorhanden. Die mindestens eine Teilnehmerstation kann in jedem der mindestens zwei Funkzugangsnetzwerke senden und/oder empfangen.
Beim erfindungsgemäßen Funkkommunikationssystem weist die erste Funknetzwerkkontrolleinrichtung, welche mit der mindestens einen Teilnehmerstation verbunden ist, Mittel zur Benutzung von Informationen für eine Entscheidung auf, ob zwischen der mindestens einen Teilnehmerstation und der zweiten Basisstation eine Verbindung aufgebaut werden soll.

Das Funkkommunikationssystem ist insbeondere so ausgestaltet, dass Mittel zur Übertragung von Informationen für eine Übergabeentscheidung zumindest teilweise über eine Zugangseinrichtung des Kernnetzes zur ersten Funknetzwerkkontrolleinrichtung vorhanden sind.

Mit Vorteil sind im erfindungsgemäßen Funkkommunikationssystem Mittel zum Speichern von Informationen für eine Übergabeentscheidung in der ersten Funknetzwerkkontrolleinrichtung vorgesehen. Dazu können grundsätzlich alle geeigneten Speichereinrichtungen Verwendung finden.

Das beschriebene Funkkommunikationssystem eignet sich insbesondere zur Durchführung des erfindungsgemäßen Verfahrens. Im Funkkommunikationssystem bzw. seinen einzelnen Bestandteilen können jeweils entsprechende Mittel und Einrichtungen zur Durchführung des Verfahrens vorhanden sein.

Die Erfindung betrifft ferner eine Funknetzwerkkontrolleinrichtung zur Verwendung in einem erfindungsgemäßen Verfahren und/oder in einem erfindungsgemäßen Funkkommunikationssystem.

Rekonfigurierbare Teilnehmerstation eignen sich hervorragend zur Verwendung in einem erfindungsgemäßen Verfahren und/oder zum Einsatz in einem erfindungsgemäßen Funkkommunikationssystem.

Nachfolgend soll die Erfindung anhand einer Figur näher erläutert werden.

Hierbei zeigt:

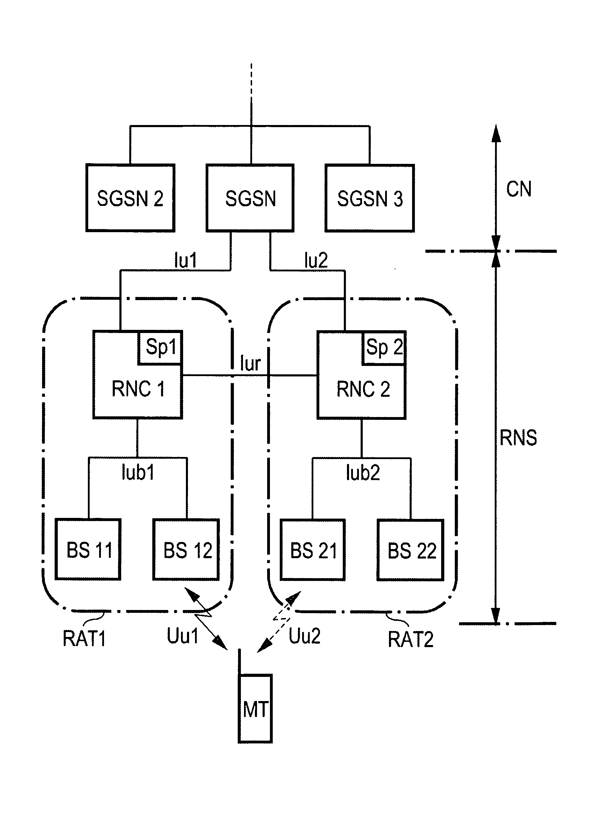

- Fig. 1:: ein Schema eines erfindungsgemäßen Funkkommunikationssystems.

In Fig. 1 sind beispielhaft drei Zugangseinrichtung SGSN, SGSN2 und SGSN3 des Kernnetzes (CN) gezeigt.

Das Funkkommunikationssystem kann über mindestens zwei Funkzugangsnetzwerke RAT1 und RAT2 Informationen übertragen. Das Funknetzsubsystem RNS umfasst in dem ersten Funkzugangsnetzwerk RAT1 von zwei gezeigten Funkzugangsnetzwerken eine erste Basistation BS12 und eine erste Funknetzwerkkontrolleinrichtung RNC1 und in einem zweiten Funkzugangsnetzwerk RAT2 der zwei Funkzugangsnetzwerke eine zweite Basistation BS21 und eine zweite Funknetzwerkkontrolleinrichtung RNC2, wobei die eine Teilnehmerstation MT in jedem der zwei Funkzugangsnetzwerke RAT1 und RAT2 senden und/oder empfangen kann.

Zwischen der Zugangseinrichtung SGSN und den Funknetzwerkkontrolleinrichtungen RNC1 und RNC2 liegen die Schnittstellen Iu1 und Iu2. Die Schnittstelle Iur verbindet die Funknetzwerkkontrolleinrichtungen RNC1 und RNC2 untereinander.

Zwischen der Funknetzwerkkontrolleinrichtung RNC1 und den von dieser kontrollierten Basisstionen BS11 und BS12 liegt die Schnittstelle Iubl, während sich zwischen der Funknetzwerkkontrolleinrichtung RNC2 und den von dieser kontrollierten Basisstionen BS21 und BS22 die Schnittstelle Iub2 befindet.

Die über die Luftschnittstelle Uu1 aktive Verbindung ist in Fig. 1 mit durchgezogener Linie und die über die Luftschnittstelle Uu2 ggf. neu aufzubauende Verbindung mit gestrichelter Linie dargestellt.

Die erste Funknetzwerkkontrolleinrichtung RNC1, welche mit der mindestens einen Teilnehmerstation MT verbunden ist, benutzt erfindungsgemäß Informationen für eine Entscheidung, ob zwischen der Teilnehmerstation MT und der zweiten Basisstation BS21 eine Verbindung aufgebaut werden soll.

Informationen für eine Übergabeentscheidung können zumindest teilweise über die Schnittstelle Iur von der zweiten Funknetzwerkkontrolleinrichtung RNC2 zur ersten Funknetzwerkkontrolleinrichtung RNC1 übertragen werden. Es ist allerdings auch als Alternative oder in Ergänzung dazu möglich, dass Informationen für eine Übergabeentscheidung zumindest teilweise über die Zugangseinrichtung SGSN des Kernnetzes CN zur ersten Funknetzwerkkontrolleinrichtung RNC1 übertragen werden. Mit den erhaltenen Informationen kann die Funknetzwerkkontrolleinrichtung RNC1 beispielsweise einen Handover einleiten. Nachdem dieser Handover abgeschlossen ist, hält die Teilnehmerstation beispielsweise eine Verbindung mit der Basisstation BS21.

Die Funknetzwerkkontrolleinrichtung RNC1 kann beispielsweise zu einem WLAN System (dann könnte man die erste Funknetzwerkkontrolleinrichtung auch als APC oder als IWU bezeichnen) und die Funknetzwerkkontrolleinrichtung RNC2 kann beispielsweise zu einem UMTS System gehören. Die Basisstationen BS11 und BS12 würden dann üblicherweise mit der Bezeichnung AP (Access Point) versehen werden und die Basisstationen BS21 und BS22 als Node B bezeichnet. Zwischen den Basisstationen BS11 und BS12 auf der einen Seite und den Basisstationen BS21 und BS22 auf der anderen Seite besteht in diesem Fall eine lose Kopplung.

Die Basisstationen BS21 und BS22 könnten in einem nicht dargestellten Fall auch von der Funknetzwerkkontrolleinrichtung RNC2 kontrolliert werden, obwohl sie auf unterschiedlichen Netzzugangtechnologien RAT basieren können. In diesem Fall läge eine strenge Kopplung vor.

## Patentansprüche

1. Verfahren zur Übergabe einer Verbindung in einem Funkkommunikationssystem, welches über mindestens zwei Funkzugangsnetzwerke (RAT1, RAT2) Informationen übertragen kann,
wobei ein erstes der mindestens zwei Funkzugangsnetzwerke (RAT1) mindestens eine erste Basistation (BS12) und eine erste Funknetzwerkkontrolleinrichtung (RNC1) und ein zweites der mindestens zwei Funkzugangsnetzwerke (RAT2) mindestens eine zweite Basistation (BS21) und eine zweite Funknetzwerkkontrolleinrichtung (RNC2) umfassen,
wobei mindestens eine Teilnehmerstation (MT) in jedem der mindestens zwei Funkzugangsnetzwerke (RAT1, RAT2) senden und/oder empfangen kann,
**dadurch gekennzeichnet,**
**dass** die erste Funknetzwerkkontrolleinrichtung (RNC1), welche mit der mindestens einen Teilnehmerstation (MT) verbunden ist, Informationen benutzt für eine Entscheidung, ob zwischen der mindestens einen Teilnehmerstation (MT) und der zweiten Basisstation (BS21) eine Verbindung aufgebaut werden soll.

2. Verfahren nach Anspruch 1,
**dadurch gekennzeichnet,**
**dass** die Verbindung zwischen der mindestens einen Teilnehmerstation (MT) und der zweiten Basisstation (BS21) anstelle der Verbindung zwischen der mindestens einen Teilnehmerstation und der ersten Basisstation (BS12) aufgebaut wird.

3. Verfahren nach Anspruch 1,
**dadurch gekennzeichnet,**
**dass** die Verbindung zwischen der mindestens einen Teilnehmerstation (MT) und der zweiten Basisstation (BS21) zumindest zeitweilig zusätzlich zur Verbindung zwischen der mindestens einen Teilnehmerstation und der ersten Basisstation (BS12) aufgebaut wird.

4. Verfahren nach einem der Ansprüche 1 bis 3,
**dadurch gekennzeichnet,**
**dass** Informationen für eine Übergabeentscheidung zumindest teilweise über eine Zugangseinrichtung (SGSN) des Kernnetzes (CN) zur ersten Funknetzwerkkontrolleinrichtung (RNC1) übertragen werden.

5. Verfahren nach einem der Ansprüche 1 bis 4,
**dadurch gekennzeichnet,**
**dass** Informationen für eine Übergabeentscheidung zumindest teilweise über eine Schnittstelle (Iur) von der zweiten Funknetzwerkkontrolleinrichtung (RNC2) zur ersten Funknetzwerkkontrolleinrichtung (RNC1) übertragen werden.

6. Verfahren nach einem der Ansprüche 1 bis 5,
**dadurch gekennzeichnet,**
**dass** in der ersten Funknetzwerkkontrolleinrichtung (RNC1) Informationen für eine Übergabeentscheidung gespeichert werden.

7. Verfahren nach einem der Ansprüche 1 bis 6,
**dadurch gekennzeichnet,**
**dass** die Informationen zumindest teilweise auf Messungen der mindestens einen Teilnehmerstation (MT) basieren.

8. Verfahren nach einem der Ansprüche 1 bis 7,
**dadurch gekennzeichnet,**
**dass** Informationen zumindest teilweise als Profil oder als Profile vorgehalten werden.

9. Verfahren nach Anspruch 8,
**dadurch gekennzeichnet,**
**dass** das Profil oder die Profile Nutzerinformationen, Funknetzwerkinformationen, Teilnehmerstationsinformationen und/oder Diensteinformationen betreffen.

10. Verfahren nach einem der Ansprüche 1 bis 9,
**dadurch gekennzeichnet,**
**dass** die Informationen statisch und/oder dynamisch sind.

11. Verfahren nach einem der Ansprüche 1 bis 10,
**dadurch gekennzeichnet,**
**dass** zumindest teilweise rekonfigurierbare Teilnehmerstationen (MT) verwendet werden.

12. Verfahren nach einem der Ansprüche 4 bis 11,
**dadurch gekennzeichnet,**
**dass** Funknetzwerkinformationen insbesondere tabellarisch in der Zugangseinrichtung (SGSN) des Kernnetzes (CN) gespeichert werden.

13. Verfahren nach einem der Ansprüche 1 bis 12,
**dadurch gekennzeichnet,**
**dass** die erste Funknetzwerkkontrolleinrichtung (RNC1) eine Übergabe einer Verbindung von der ersten Basistation (BS12) mit der mindestens einen Teilnehmerstation (MT) auf eine von der ersten Funknetzwerkkontrolleinrichtung (RNC12) kontrollierte dritte Basisstation (BS11) mit der mindestens einen Teilnehmerstation (MT)und/oder
**dass** die zweite Funknetzwerkkontrolleinrichtung eine Übergabe einer Verbindung von der zweiten Basistation (BS21) mit der mindestens einen Teilnehmerstation (MT) auf eine von der zweiten Funknetzwerkkontrolleinrichtung (RNC2) kontrollierte vierte Basisstation(BS22) mit der mindestens einen Teilnehmerstation (MT) einleitet.

14. Funkkommunikationssystem umfassend mindestens zwei Funkzugangsnetzwerke (RAT1, RAT2) zur Übertragung von Informationen,
wobei ein erstes der mindestens zwei Funkzugangsnetzwerke (RAT1) mindestens eine erste Basistation (BS12) und eine erste Funknetzwerkkontrolleinrichtung (RNC1) und ein zweites der mindestens zwei Funkzugangsnetzwerke (RAT2) mindestens eine zweite Basistation (BS21) und eine zweite Funknetzwerkkontrolleinrichtung (RNC2) umfassen,
wobei mindestens eine Teilnehmerstation (MT) in jedem der mindestens zwei Funkzugangsnetzwerke (RAT1, RAT2) senden und/oder empfangen kann,
**dadurch gekennzeichnet,**
**dass** die erste Funknetzwerkkontrolleinrichtung (RNC1), welche mit der mindestens einen Teilnehmerstation (MT) verbunden ist, Mittel zur Benutzung von Informationen für eine Entscheidung aufweist, ob zwischen der mindestens einen Teilnehmerstation und der zweiten Basisstation (BS21) eine Verbindung aufgebaut werden soll.

15. Funkkommunikationssystem nach Anspruch 14,
**dadurch gekennzeichnet,**
**dass** Mittel zur Übertragung von Informationen für eine Übergabeentscheidung zumindest teilweise über eine Zugangseinrichtung (SGSN) des Kernnetzes (CN) zur ersten Funknetzwerkkontrolleinrichtung (RNC1) vorhanden sind.

16. Funkkommunikationssystem nach Anspruch 14 oder 15,
**dadurch gekennzeichnet,**
**dass** Mittel (Sp1) zum Speichern von Informationen für eine Übergabeentscheidung in der ersten Funknetzwerkkontrolleinrichtung (RNC1) vorgesehen sind.

17. Funknetzwerkkontrolleinrichtung (RNC1, RNC2) zur Verwendung in einem Verfahren nach einem der Ansprüche 1 bis 13 und/oder in einem Funkkommunikationssystem nach einem der Ansprüche 14 bis 16.

18. Rekonfigurierbare Teilnehmerstation (MT) zur Verwendung in einem Verfahren nach einem der Ansprüche 1 bis 13 und/oder in einem Funkkommunikationssystem nach einem der Ansprüche 14 bis 16.
